# EUROPÄISCHE PATENTSCHRIFT

(11) **EP 1 858 635 B1**
(45) Veröffentlichungstag und Bekanntmachung des Hinweises auf die Patenterteilung: **02.03.2016**
(21) Anmeldenummer: 06724924.3
(22) Anmeldetag: 03.03.2006
(51) Int. Cl.: B01J 13/18, B01J 13/02

(54) **MIKROKAPSELPULVER**
MICROSCAPSULE POWDER
POUDRE CONSTITUEE DE MICROCAPSULES

(30) Priorität: 04.03.2005 DE 102005010563; 15.04.2005 DE 102005017635
(43) Veröffentlichungstag der Anmeldung: 28.11.2007
(73) Patentinhaber: BASF SE, 67056 Ludwigshafen (DE)
(72) Erfinder: AMRHEIN, Patrick, 65239 Hochheim (DE); SPANNAGEL, Albert, 69251 Gaiberg (DE); ASCHERL, Hermann, 67246 Dirmstein (DE); LANG-WITTKOWSKI, Gabriele, 68167 Mannheim (DE)
(86) Internationale Anmeldenummer: PCT/EP2006/060439
(87) Internationale Veröffentlichungsnummer: WO 2006/092439

(56) Entgegenhaltungen:
- WO-A-99/24525
- WO-A-2004/092299
- WO-A-2006/018130
- WO-A1-99/24525
- WO-A1-2004/092299
- WO-A1-2006/018130
- DE-A1- 10 209 222
- DE-A1- 10 209 222

## Beschreibung

Die vorliegende Erfindung betrifft ein Mikrokapselpulver mit Latentwärmespeichermaterialien als Kapselkern und einer Kapselwand aufgebaut aus
- 10 bis 100 Gew.-%: eines oder mehrerer C₁-C₂₄-Alkylester der Acryl- und/oder Methacrylsäure (MonomereI),
- 0 bis 80 Gew.-%: eines bi- oder pölyfunktionellen Monomers (Monomere II), welches in Wasser nicht löslich oder schwer löslich ist und
- 0 bis 90 Ges.-%: sonstige Monomere (Monomere III)
jeweils bezogen auf das Gesamtgewicht der Monomere, ein Verfahren zu seiner Herstellung sowie seine Verwendung in Bindebaustoffen, Textilien, Wärmeträgerflüssigkeiten und Schüttungen.

In den letzten Jahren sind als neue Materialkombination Baustoffe mit Latentwärmespeichern untersucht worden. Ihre Funktionsweise beruht auf der beim fest/flüssigPhasenübergang auftretenden Umwandlungsenthalpie, die eine Energieaufnahme oder Energieabgabe an die Umgebung bedeutet. Sie können damit zur Temperaturkonstanthaltung in einem festgelegten Temperaturbereich verwendet werden. Da die Latentwärmespeichermaterialien je nach Temperatur auch flüssig vorliegen, können sie nicht direkt mit Baustoffen verarbeitet werden, denn Emissionen an die Raumluft sowie die Trennung vom Baustoff wären zu befürchten.

Die EP-A-1 029 018 lehrt die Verwendung von Mikrokapseln mit einer Kapselwand aus einem hochvernetzten Methacrylsäureesterpolymer und einem Latentwärmespeicherkern in Bindebaustoffen wie Beton oder Gips. Die DE-A-101 39 171 beschreibt die Verwendung von mikroverkapselten Latentwärmespeichermaterialien in Gipskartonplatten. Ferner lehrt die ältere US-Anmeldung Ser. No 60/573420 den Einsatz von mikroverkapselten Latentwärmespeichermaterialien in Spanplatlen zusammen mit Melaminformaldehydharzen als Bindemittel.

Das gemäß dieser Schriften eingesetzte Mikrokapselpulver hat mittlere Teilchengrößen im Bereich von 2 - 25 µm. Die Größe dieser Pulverteilchen entspricht somit den Kapselgrößen in den Mikrokapseldispersionen. Derart feinteilige Pulver lassen sich jedoch oftmals schlecht verarbeiten. Die Folge sind Formulierungen mit einem hohen Bindemittelgehalt. Darüber hinaus neigen sie aufgrund des hohen Feinanteils zum Stauben. Dies ist zusätzlich in Bereich der Arbeitssicherheit nachteilig. Pulver mit einem hohen Feinstaubanteil erfordern besondere Arbeitsschutzmässnahmen (Atemschutz) und, ebenso durch die erhöhte Staubexplosionsgefährdungsklasse zusätzliche Maßnahmen beim Umgang mit solchen Pulvern.

Die ältere PCT-Anmeldung PCT/EP2005/008354 lehrt grobteilige Mikrokapselzubereitungen bei denen das Mikrokapselpulver mit einem polymeren Bindemittel zu Teilchen von Größen oberhalb von bevorzugt 500 µm extrudiert wird. Es gibt jedoch Anwendungen bei denen die Verarbeitung eines Pulvers gewünscht wird.

WO 2004/092299 A offenbart Mikrokapseln mit Latentwärmespeichermaterialien als Kapselkern und einer Kapselwand aufgebaut aus 30 bis 100 Gew.-% eines oder mehrerer C1-C24-Alkylester der Acryl- und/oder Methacrylsäure (monomersI); 0 bis 80 Gew.-% eines bi- oder polyfunktioriellen Monomers (Monomere II), welches in Wasser nicht löslich oder schwer löslich ist, und 0 bis 40 Gew.-% sonstige Monomere (Monomer III), jeweils bezogen auf das Gesamtgewicht der Monomere.

Für Anwendungen als Ausrüstung im Textilsektor ist ein wichtiges Kriterium die chemische Reinigungsbeständigkeit. Hiermit ist die Beständigkeit gegenüber chlorierten oder perchlorierten Lösungsmitteln gemeint. Bei Tests mit herkömmlichen Mikrokapseln ist eine Gewichtsabnahme zu beobachten, die vom Herauslösen von Wachs aus defekten Kapseln bzw. von nicht verkapseitem Wachs herrührt. Oftmals liegen solche Auswaschverluste im Bereich von 5-15 %.

Daher war es ein Aspekt der vorliegenden Erfindung ein Mikrokapselpulver mit Latentwärmespeichermaterialien als Kapselkern zu finden, das eine höhere chemische Reinigungsbeständigkeit aufweist. Darüber hinaus soll es sich vorteilhaft verarbeiten lassen. So soll es gut redispergierbar sein und nicht zur Verblockung bei Lagerung als Pulver neigen.

Dem gemäß wurde ein Mikrokapselpulver gefunden mit Latentwärmespeichermaterialien als Kapselkern und einer Kapselwand aufgebaut aus
- 10 bis 100 Gew.%: eines oder mehrerer C₁-C₂₄-Alkylester der Acryl- und/oder Methacrylsäure (Monomere I),
- 0 bis 80 Gew.-%: eines bi- oder polyfunktionellen Monomers (Monomere II), welches in Wasser nicht löslich oder schwer löslich ist und
- 0 bis 90 Gew.-%: sonstige Monomere (Monomer III)
jeweils bezogen auf das Gesamtgewicht der Monomere,
mit einer mittleren Teilchengröße im Bereich von 150 - 400 µm und mit 80 Gew.-% der Teilchen, die einen Durchmesser ≥ 90 µm haben.

Bevorzugtes Mikrokapselpulver hat eine mittlere Teilchengröße von ≥ 200 µm, insbesondre ≥ 250 µm und ≤ 380 µm, insbesondere ≤ 350 µm bestimmt durch Fraunhoferbeugung, Volumenmittelwert.

Der 80 %-Wert der Breite der Größenverteilung der Teilchen ist ≤ 500 µm, bevorzugt ≤ 400 µm und insbesondere ≤ 300 µm.

Bevorzugt haben 80 Gew.-% der Teilchen einen Durchmesser ≥ 100 µm, besonders bevorzugte ≥ 120 µm.

Die erfindungsgemäßen Pulverteilchen sind Aggregate aus Mikrokapseln den sogenannten Primärteilchen. Solche Teilchen werden oft auch als Granulat oder Agglomerat bezeichnet. Die Oberfläche der Pulverteilchen ist dabei uneben und zackig. Die Primärteilchen, also der Mikrokapseln in der Dispersion, haben eine mittlere Teilchengröße von 0,5 bis 30 µm, vorzugsweise 3 bis 12 µm.

Da das Mikrokapselpulver meist unter Verarbeitung mit Wasser oder wässrigen Stoffen hergestellt wird, können die Zubereitungen noch Reste von Wasser enthalten. Die Menge an Restfeuchte beträgt üblicherweise von 0 bis etwa 4 Gew.-% bezogen auf das Gesamtgewicht.

Das erfindungsgemäße Mikrokapselpulver besteht im wesentlichen aus Teilchen mit einem Kapselkern bestehend überwiegend, zu mehr als 95 Gew.%, aus Latentwärmespeichermaterialien und einem Polymer als Kapselwand. Der Kapselkern ist dabei abhängig von der Temperatur fest oder flüssig. Die mittlere Teilchengröße der Kapseln (Z-Mittel mittels Lichtstreuung) beträgt 0,5 bis 100 µm, bevorzugt 1 bis 80 µm insbesondere 1 bis 50 µm. Das Gewichtsverhältnis von Kapselkern zu Kapselwand beträgt im allgemeinen von 50:50 bis 95:5. Bevorzugt wird ein Kern/Wand-Verhältnis von 70:30 bis 93:7.

Latentwärmespeichermaterialien sind definitionsgemäß Substanzen, die in dem Temperaturbereich, in welchem eine Wärmeübertragung vorgenommen werden soll, einen Phasenübergang aufweisen. Vorzugsweise weisen die Latentwärmespeichermaterialien einen fest/flüssig Phasenübergang im Temperaturbereich von -20 bis 120°C auf. In der Regel handelt es sich bei dem Latentwärmespeichermaterial um eine organische, bevorzugt lipophile Substanz.

Als geeignete Substanzen sind beispielhaft zu nennen:
- aliphatische Kohlenwasserstoffverbindungen wie gesättigte oder ungesättigte C_{1O}-C₄₀-Kohlenwasserstoffe, die verzweigt oder bevorzugt linear sind, z.B. wie n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan sowie cyclische Kohlenwasserstoffe, z.B. Cyclohexan, Cyclooctan, Cyclodecan;
- aromatische Kohlenwasserstoffverbindungen wie Benzol, Naphthalin, Biphenyl, o- oder n-Terphenyl, C₁-C₄₀-alkylsubstituierte aromatische Kohlenwasserstoffe wie Dodecylbenzol, Tetradecylbenzol, Hexadecylbenzol, Hexylnaphthalin oder Decylnaphthalin;
- gesättigte oder ungesättigte C₆-C₃₀₋Fettsäuren wie Laurin-, Stearin-, Öl- oder Behensäure, bevorzugt eutektische Gemische aus Decansäure mit z.B. Myristin-, Palmitin- oder Laurinsäure;
- Fettalkohole wie Lauryl-, Stearyl-, Oleyl-, Myristyl-, Cetylalkohol, Gemische wie Kokosfettalkohol sowie die sogenannten Oxoalkohole, die man durch Hydroformylierung von α-Olefinen und weiteren Umsetzungen erhält;
- C₆-C₃₀-Fettamine, wie Decylamin, Dodecylamin, Tetradecylamin oder Hexadecylamin;
- Ester wie C₁-C₁₀-Alkylester von Fettsäuren wie Propylpalmitat, Methylstearat oder Methylpalmitat sowie bevorzugt ihre eutektischen Gemische oder Methylcinnamat;
- natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren;
- halogenierte Kohlenwasserstoffe wie Chlorparaffin, Bromoctadecan, Brompentadecan, Bromnonadecan, Bromeicosan, Bromdocosan.

Weiterhin sind Mischungen dieser Substanzen geeignet, solange es nicht zu einer Schmelzpunkterniedrigung außerhalb des gewünschten Bereichs kommt, oder die Schmelzwärme der Mischung für eine sinnvolle Anwendung zu gering wird.

Vorteilhaft ist beispielsweise die Verwendung von reinen n-Alkanen, n-Alkanen mit einer Reinheit von größer als 80% oder von Alkangemischen, wie sie als technisches Destillat anfallen und als solche handelsüblich sind.

Weiterhin kann es vorteilhaft sein, den kapselkern-bildenden Substanzen in ihnen lösliche Verbindungen zuzugeben, um so die zum Teil bei den unpolaren Substanzenauftretende Gefrierpunktserniedrigung zu verhindern. Vorteilhaft verwendet man, wie in der US-A 5 456 852 beschrieben, Verbindungen mit einem 20 bis 120 K höheren Schmelzpunkt als die eigentliche Kernsubstanz. Geeignete Verbindungen sind die oben als lipophile Substanzen erwähnten Fettsäuren, Fettalkohole, Fettamide sowie aliphatische Kohlenwasserstoffverbindungen. Sie werden in Mengen von 0,1 bis 10 Gew.-% bezogen auf den Kapselkern zugesetzt.

Je nach Temperaturbereich, in dem die Wärmespeicher gewünscht sind, werden die Latentwärmespeichermaterialien gewählt. Beispielsweise verwendet man für Wärmespeicher in Baustoffen in gemäßigtem klima bevorzugt Latentwärmespeichermaterialien, deren fest/flüssig Phasenübergang im Temperaturbereich von 0 bis 60°C liegt. So wählt man in der Regel für Innenraumanwendungen Einzelstoffe oder Mischungen mit Umwandlungstemperaturen von 15 bis 30°C. Bei Solaranwendungen als Speichermedium oder zur Überhitzungsvermeidung von transparenter Wärmedämmung, wie in der EP-A-333 145 beschrieben, sind vor allem Umwandlungstemperaturen von 30-60°C geeignet.

Bevorzugte Latentwärmespeichermaterialien sind aliphatische Kohlenwasserstoffe besonders bevorzugt die oben beispielhaft aufgezählten. Insbesondere werden aliphatische Kohlenwasserstoffe mit 14 bis 20 Kohlenstoffatomen sowie deren Gemische bevorzugt.

Die Kapselwand der Mikrokapseln ist aus 10 bis 100 Gew.%, vorzugsweise 30 bis 95 Gew.-% eines oder mehrerer C₁-C₂₄-Alkylester der Acryl- und/oder Methacrylsäure als Monomere I aufgebaut. Außerdem können die Polymere bis zu 80 Gew.%, vorzugsweise 5 bis 60 Gew.%, insbesondere 10 bis 50 Gew.%, eines bi- oder polyfunktionellen Monomers als Monomere II, welches in Wasser nicht löslich oder schwer löslich ist, einpolymerisiert enthalten. Daneben können die Polymere bis zu 90 Gew.%, vorzugsweise bis zu 50 Gew.%, insbesondere bis zu 30 Gew.-% sonstige Monomere III einpolymerisiert enthalten.

Als Monomere I eignen sich C₁-C₂₄Alkylester der Acryl- und/oder Methacrylsäure. Besonders bevorzugte Monomere I sind Methyl-, Ethyl-, n-Propyl- und n-Butylacrylat und/oder die entsprechenden Methacrylate. Bevorzugt sind iso-Propyl-, iso-Butyl-, sec.-Butyl- und tert.-Butylacrylat und die entsprechenden Methacrylate. Ferner ist Methacrylnitril zu nennen. Generell werden die Methacrylate bevorzugt.

Geeignete Monomere II sind bi- oder polyfunktionelle Monomere, welche in Wasser nicht löslich oder schwer löslich sind, aber eine gute bis begrenzte Löslichkeit in der lipophilen Substanz haben. Unter Schwerlöslichkeit ist eine Löslichkeit kleiner 60 g/l bei 20°C zu verstehen. Unter bi- öder polyfunktionellen Monomeren versteht man Verbindungen, die wenigstens 2 nichtkonjugierte ethylenische Doppelbindungen haben. Vornehmlich kommen Divinyl- und Polyvinylmonomere in Betracht, die eine Vernetzung der Kapselwand während der Polymerisation bewirken.

Bevorzugte bifunktionelle Monomere sind die Diester von Diolen mit Acrylsäure oder Methacrylsäure, ferner die Diallyl- und Divinylether dieser Diole.

Bevorzugte Divinylmonomere sind Ethandioldiacrylat, Divinylbenzol, Ethylenglykoldimethacrylat, 1,3-Butylenglykoldimethacrylat, Methallylmethacrylamid und Allylmethacrylat. Besonders bevorzugt sind Propandiol-, Butandiol-, Pentandiol- und Hexandioldiacrylat oder die entsprechenden Methacrylate.

Bevorzugte Polyvinylmonomere sind Trimethylolpropantriacrylat und -methacrylat, Pentaerythrittriallylether und Pentaerythrittetraacrylat.

Als Monomere III kommen sonstige Monomere in Betracht, bevorzugt sind Monomere IIIa wie Vinylacetat, Vinylpropionat und Vinylpyridin.

Besonders bevorzugt sind die wasserlöslichen Monomere IIIb, z.B. Acrylnitril, Methacrylamid, Acrylsäure, Methacrylsäure, Itaconsäure, Maleinsäure, Maleinsäureanhydrid, N-Vinylpyrrolidon, 2-Hydroxyethylacrylat und -methacrylat und Acrylamido-2-methylpropansulfonsäure. Daneben sind insbesondere N-Methylolacrylamid, N-Methylolmethacrylamid, Dimethylaminoethylmethacrylat und Diethylaminoethylmethacrylat zu nennen.

Nach einer weiteren bevorzugten Ausführungsform sind die Wand-bildenden Polymere aus 30 bis 90 Gew.-% Methacrylsäure, 10 bis 70 Gew.-% eines Alkylesters der (Meth)acrylsäure, bevorzugt Methylmethacrylat, tert-Butylmethacrylat, Phenylmethacrylat und Cyclohexylmethacrylat, und 0 bis 40 Gew.-% weitere ethylenisch ungesättigter Monomeren gebildet. Diese weiteren ethylenisch ungesättigten Monomere können die für diese Ausführungsform bisher nicht erwähnten Monomere I, II undloder III sein. Da sie in der Regel keinen wesentlichen Einfluss auf die gebildeten Mikrokapseln dieser Ausführungsform haben, ist ihr Anteil bevorzugt < 20 Gew.-% insbesondere <10 Gew.-%. Derartige Mikrokapseldispersionen sowie ihre Herstellung werden in der EP-A-1 251 954 beschrieben, auf die ausdrücklich Bezug genommen wird.

Die Mikrokapseldispersionen lassen sich durch eine sogenannte in-situ-Polymerisation herstellen und werden hieraus in die erfindungsgemäßen Pulver überführt.

Die bevorzugten Mikrokapseldispersionen sowie ihre Herstellung sind aus der EP-A-457 154, DE-A-10 139 171, DE-A-102 30 581 und EP-A-1 321 182 bekannt, auf die ausdrücklich verwiesen wird. So stellt man die Mikrokapseln in der Weise her, dass man aus den Monomeren, einem Radikalstarter, einem Schutzkolloid und der einzukapselnden lipophilen Substanz eine stabile Öl-in-Wasser-Emulsion herstellt, in der sie als disperse Phase vorliegen. Anschließend löst man die Polymerisation der Monomeren durch Erwärmung aus und steuert sie durch weitere Temperaturerhöhung, wobei die entstehenden Polymere die Kapselwand bilden, welche die lipophile Substanz umschließt.

Als Radikalstarter für die radikalisch ablaufende Polymerisationsreaktion können die üblichen Peroxo- und Azoverbindungen, zweckmäßigerweise in Mengen von 0,2 bis 5 Gew.%, bezogen auf das Gewicht der Monomere, eingesetzt werden.

Je nach Aggregatzustand des Radikalstarters und seinem Löslichkeitsverhalten kann er als solcher, bevorzugt jedoch als Lösung, Emulsion (flüssig in flüssig) oder Suspension (fest in flüssig) zugeführt werden, wodurch sich insbesondere kleine Stoffmengen Radikalstarter präziser dosieren lassen.

Als bevorzugte Radikalstarter sind tert.-Butylperoxyneodecanoat, tert.-Amylperoxypivalat, Dilauroylperoxid, tert.-Amylperoxy-2-ethylhexanoat, 2,2'-Azobis-(2,4-dimethyl)valeronitril, 2,2'-Azobis-(2-methylbutyronitril), Dibenzoylperoxid, tert.-Butylper-2-ethylhexanoat, Di-tert.-butylperoxid, tert.-Butylhydroperoxid, 2,5-Dimethyl-2,5-di-(tert.-butylperoxy)hexan und Cumolhydroperoxid zu nennen.

Besonders bevorzugte Radikalstarter sind Di-(3,5,5-trimethylhexanoyl)-peroxid, 4,4'-Azobisisobutyronitril, tert.-Butylperpivalat und Dimethyl-2,2-azobisisobutyrat. Diese weisen eine Halbwertzeit von 10 Stunden in einem Temperaturbereich von 30 bis 100°C auf.

In der Regel führt man die Polymerisation bei 20 bis 100°C, vorzugsweise bei 40 bis 95°C durch. Abhängig von der gewünschten lipophilen Substanz ist die Öl-in-Wasser-Emulsion bei einer Temperatur zu bilden, bei der das Kerrimaterial flüssig/ölig ist. Entsprechend muß ein Radikalstarter gewählt werden, dessen Zerfallstemperatur oberhalb dieser Temperatur und die Polymerisation ebenfalls 2 bis 50°C oberhalb dieser Temperatur durchgeführt werden, so dass man gegebenenfalls Radikalstarter wählt, deren Zerfallstemperatur oberhalb des Schmelzpunkts der lipophilen Substanz liegt.

Eine gängige Verfahrensvariante für lipophile Substanzen mit einem Schmelzpunkt bis etwa 60°C ist eine Reaktionstemperatur beginnend bei 60°C, die im Verlauf der Reaktion auf 85°C erhöht wird. Vorteilhafte Radikalstarter haben eine 10-Stunden Halbwertszeit im Bereich von 45 bis 65°C wie t-Butylperpivalat.

Nach einer weiteren Verfahrensvariante für lipophile Substanzen mit einem Schmelzpunkt oberhalb 60°C wählt man ein Temperaturprogramm, welches bei entsprechend höheren Reaktionstemperaturen startet. Für Anfangstemperaturen um die 85°C werden Radikalstarter mit einer 10-Stunden Halbwertszeit im Bereich von 70 bis 90°C bevorzugt wie t-Butylper-2-ethylhexanoat.

Zweckmäßigerweise wird die Polymerisation bei Normaldruck vorgenommen, jedoch kann man auch bei vermindertem oder leicht erhöhtem Druck z.B. bei einer Polymerisationstemperatur oberhalb 100°C, arbeiten, also etwa im Bereich von 0,5 bis 5 bar.

Die Reaktionszeiten der Polymerisation betragen normalerweise 1 bis 10 Stunden, meistens 2 bis 5 Stunden.

Bevorzugt werden Mikrokapseln durch schrittweise Erwärmung der Öl-in-Wasser-Emulsion gebildet. Dabei ist unter schrittweise zu verstehen, dass durch Temperaturerhöhung die Reaktion durch Zerfall des Radikalstarters ausgelöst wird und durch weitere Erwärmung, die kontinuierlich oder periodisch erfolgen kann, die Polymerisation gesteuert wird. Die Geschwindigkeit der Polymerisation kann dabei durch Wahl der Temperatur und der Menge an Radikalstarter gesteuert werden. Dies geschieht bevorzugt mit Hilfe eines Programms mit ansteigender Temperatur. Die gesamte Polymerisationszeit kann zu diesem Zweck in zwei oder mehr Perioden unterteilt werden. Die erste Polymerisationsperiode ist durch einen langsamen Zerfall des Polymerisationsinitiators gekennzeichnet. In der zweiten Polymerisationsperiode und gegebenenfalls weiteren Polymerisationsperioden wird die Temperatur der Reäktionsmischung erhöht, um den Zerfall der Polymerisationsinitiatoren zu beschleunigen. Die Temperatur kann in einem Schritt oder in mehreren Schritten oder kontinuierlich in linearer oder nichtlinearer Weise erhöht werden. Die Temperaturdifferenz zwischen dem Beginn und dem Ende der Polymerisation kann bis zu-50°C betragen. Im Allgemeinen beträgt diese Differenz 3 bis 40°C, vorzugsweise 3 bis 30°C.

Nach Erreichen der Endtemperatur setzt man die Polymerisation zweckmäßigerweise noch etwa für eine Zeit von bis zu 2 Stunden fort, um Restmonomergehalte abzusenken. Im Anschluss an die eigentliche Polymerisationsreaktion bei einem Umsatz von 90 bis 99 Gew.% ist es in der Regel vorteilhaft, die wässrigen Mikrokapseldispersionen weitgehend frei von Geruchsträgern, wie Restmonomere und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Ferner kann es chemisch geschehen, wie in der WO 9924525 beschrieben, vorteilhaft durch redoxinitüerte Polymerisation, wie in der DE-A-4 435 423, DE-A-4419518 und DE-A-4435422 beschrieben.

Man kann auf diese Weise eine Mikrokapseldispersion mit Mikrokapseln mit einer mittleren Teilchengröße im Bereich von 0,5 bis 30 µm herstellen, wobei die Teilchengröße in an sich bekannter Weise über, die Scherkraft, die Rührgeschwindigkeit, das Schutzkolloid und seine Konzentration eingestellt werden kann.

Bevorzugte Schutzkolloide sind wasserlösliche Polymere, da diese die Oberflächenspannung des Wassers von 73 mN/m maximal auf 45 bis 70 mN/m senken und somit die Ausbildung geschlossener Kapselwände gewährleisten und damit die Ausbildung von Mikrokapseln mit mittleren Teilchengrößen im Bereich von 0,5 bis 30 µm, vorzugsweise 2 bis 12 µm, in der Dispersion ermöglichen.

In der Regel werden die Mikrokapseln in Gegenwart wenigstens eines organischen Schutzkolloids hergestellt, das sowohl anionisch als auch neutral sein kann. Auch können anionische und nichtionische Schutzkolloide zusammen eingesetzt werden. Bevorzugt verwendet man anorganische Schutzkolloide gegebenenfalls in Mischung mit organischen Schutzkolloiden oder nichtionische Schutzkolloide.

Nach einer weiteren Ausführungsform werden organisch neutrale Schutzkolloide bevorzugt.

Organische neutrale Schutzkolloide sind Cellulosederivate wie Hydroxyethylcellulose, Methylhydroxyethylcellulose, Methylcellulose und Carboxymethylcellulose, Polyvinylpyrrolidon, Copolymere des Vinylpyrrolidons, Gelatine, Gummiarabicum, Xanthan, Natriumalginat, Kasein, Polyethylenglykole, bevorzugt Polyvinylalkohol und partiell hydrolysierte Polyvinylacetate sowie Methylhydroxypropylcellulose.

Als anionische Schutzkolloide eignen sich Polymethacrylsäure, die Copolymerisate des Sulfoethylacrylats-und -methacrylats, Sulfopropylacrylats und -methacrylats, des N-(Sulfoethyl)-maleinimids, der 2-Acrylamido-2-alkylsulfonsäuren, Styrolsulfonsäure sowie der Vinylsulfonsäure.

Bevorzugte anionische Schutzkolloide sind Naphthalinsulfonsäure und Naphthalin-sulfonsäure-Formaldehyd-Kondensate sowie vor allem Polyacrylsäuren und Phenol-sulfonsäure-Formaldehyd-Kondensate.

Die anionischen und nichtionischen Schutzkolloide werden in der Regel in Mengen von 0,1 bis 10 Gew.% eingesetzt, bezogen auf die Wasserphase der Emulsion.

Bevorzugt werden anorganische Schutzkolloide, sogenannte Pickering-Systeme, die eine Stabilisierung durch sehr feine feste Partikel ermöglichen und in Wasser unlöslich, aber dispergierbar sind oder unlöslich und nicht dispergierbar in Wasser, aber benetzbar von der lipophilen Substanz sind.

Die Wirkweise und ihr Einsatz ist in der EP-A-1 029 0188 sowie der EP-A-1 321 182 beschrieben, auf deren Inhalte ausdrücklich Bezug genommen wird.

Ein Pickering-System kann dabei aus den festen Teilchen allein oder zusätzlich aus Hilfsstoffen bestehen, die die Dispergierbarkeit der Partikel in Wasser oder die Benutzbarkeit der Partikel durch die lipophile Phase verbessern.

Die anorganischen festen Partikel können Metallsalze sein, wie Salze, Oxide und Hydroxide von Calcium, Magnesium, Eisen, Zink, Nickel, Titan, Aluminium, Silicium, Barium und Mangan. Zu nennen sind Magnesiumhydroxid, Magnesiumcarbonat, Magnesiumoxid, Calciumoxalat, Calciumcarbonat, Bariumcarbonat, Bariumsulfat, Titandioxid, Aluminiumoxid, Aluminiumhydroxid und Zinksulfid. Silikate, Bentonit, Hydroxyapatit und Hydrotalcite seien ebenfalls genannt. Besonders bevorzugt sind hochdisperse Kieselsäuren, Magnesiumpyrophosphat und Tricalciumphosphat.

Die Pickering-Systeme können sowohl zuerst in die Wasserphase gegeben werden, als auch zu der gerührten Emulsion von Öl-in-Wasser zugegeben werden. Manche feinen, festen Partikel werden durch eine Fällung hergestellt, wie in der EP-A-1 029 018, sowie der EP-A-1 321 182 beschrieben.

Die hochdispersen Kieselsäuren können als feine, feste Teilchen in Wasser dispergiert werden. Es ist aber auch möglich, sogenannte kolloidale Dispersionen von Kieselsäure in Wasser zu verwenden. Die kolloidalen Dispersionen sind alkalische, wässrige Mischungen von Kieselsäure. Im alkalischen pH-Bereich sind die Partikel gequollen und in Wasser stabil. Für eine Verwendung dieser Dispersionen als Pickering-System ist es vorteilhaft, wenn der pH-Wert der Öl-in-Wasser Emulsion mit einer Säure auf pH 2 bis 7 eingestellt wird.

Die anorganischen, Schutzkolloide werden in der Regel in Mengen von 0,5 bis 15 Gew.%, bezogen auf die Wasserphase, eingesetzt.

Im allgemeinen werden die organischen neutralen Schutzkolloide in Mengen von 0,1 bis 15 Gew.%, vorzugsweise von 0,5 bis 10 Gew.% eingesetzt, bezogen auf die Wasserphase.

Vorzugsweise wählt man die Dispergierbedingungen zur Herstellung der stabilen Öl-in-Wasser Emulsion in an sich bekannter Weise so, dass die Öltröpfchen die Größe der gewünschten Mikrokapseln haben.

Das erfindungsgemäße Mikrokapselpulver wird beispielsweise durch Sprühtrocknung der Mikrokapseldispersionen erhalten. Bevorzugt erfolgt das Versprühten der wässrigen Polymerisatdispersion im Warmluftstrom mittels Einstoffdüsen. Die Tröpfchengröße bei Austritt wird so gewählt, dass ein Mikrokapselpulver entsteht, beim dem die Pulverteilchen eine mittlere Teilchengröße im Bereich von 150 - 400 µm und 80 Gew.-% der Teilchen eine Größe 22 90 µm haben. Abhängig von der Viskosität der Mikrokapseldispersion wählt der Fachmann den Durchmesser der Düse und den Vordruck des Stoffstroms. Je höher der Vordruck, desto kleinere Tröpfchen werden erzeugt. Üblicherweise wird die Mikrokapseldispersion im Bereich von 2-200 bar eingespeist. Vorteilhaft wird eine Einstoffdüse mit Drallerzeuger verwendet. Über die Auswahl des Drallerzeugers können Tropfengröße und Sprühwinkel zusätzlich beeinflusst werden. Beispielsweise kann man Einstoffdüsen der Firma Delavan verwenden, die einen typischen Aufbau bestehend aus Drallkammer, welche den Sprühwinkel beeinflusst, und Lochplatte haben, welche den Durchsatz beeinflußt

Im allgemeinen wird so vorgegangen, dass die Eingangstemperatur des Warmluftstroms im Bereich von 100 bis 200°C, vorzugsweise 120 bis 180°C, und die Ausgangstemperatur des Warmluftstroms im Bereich von 30 bis 110°C, vorzugsweise 50 bis 90°C liegt. Die Temperaturdifferenz zwischen Eingangs- und Ausgangstemperatur beträgt vorzugsweise mindestens 50 °C, bevorzugt mindestens 60 °C und besonders bevorzugt mindestens 70 °C. Die Abscheidung der Feinteile aus dem Gasstrom erfolgt normalerweise unter Verwendung von Zyklonen oder Filterabscheidern. Dabei werden die Feinteile bevorzugt redispergiert und in den Stoffstrom zurückgeführt. Die versprühte wässrige Polymerisatdispersion und der Warmluftstrom werden vorzugsweise parallel geführt.

Nach einer Verfahrensvariante ist es möglich, nachgeschaltet an den Trockner, ein Wirbelbett zu schalten, um gegebenenfalls Restfeuchte auszutragen. Verfahren, bei denen an die Sprühtrocknung eine Wirbeibetttrocknung angeschlossen ist, werden bevorzugt, da sie zu einem Mikrokapselpulver mit einem geringeren Feinanteil führen.

Als Sprühturm lassen sich beispielsweise Trockner der Firmen Anhydro, Miro oder Nubilosa verwenden, die Turmhöhen von 12-30 Metern und Breiten von 3 bis 8 Metern haben. Der Durchsatz an Trockenluff liegt für solche Sprühtürme typischer Weise im Bereich von 20-30 t/h. Der Durchsatz an Mikrokapseldispersion liegt dann in der Regel bei 1 bis 1,5 t/h.

Ferner können die Pulvereigenschaften auch durch die Temperatur der Nachbehandlung, mit der das Pulver aus dem Sprühturm ausgetragen wird beeinflusst werden. Typischerweise stellt man Temperaturbereiche von 20-30 °C, selten höher als 40 °C ein.

Gegebenenfalls setzt man zur Sprühtrocknung Sprühhilfsmittel zu, um die Sprühtrocknung zu erleichtern, oder bestimmte Pulvereigenschaften einzustellen, z.B. Staubarmut, Rieselfähigkeit oder verbesserte Redispergierbarkeit. Dem Fachmann sind eine Vielzahl von Sprühhilfsmitteln geläufig. Beispiele hierfür finden sich in DE-A 19629525, DE-A 19629526, DE-A 2214410, DE-A 2445813, EP-A 407889 oder EP-A 784449. Vorteilhafte Sprühhilfsmittel sind beispielsweise wasserlösliche Polymere vom Typ Polyvinylalkohol oder teilhydrolysierte Polyvinylacetate, Cellulosederivate wie Hydroxyethylcellulose, Carboxymethylcellulose, Methylcellulose, Methylhydroxyethylcellulose und Methylhydroxypropylcellulose, Polyvinylpyrrolidon, Copolymere des Vinylpyrrolidons, Gelatine, bevorzugt Polyvinylalkohol und partiell hydrolysierte Polyvinylacetate sowie Methylhydroxypropylcellulose.

Bevorzugt wird bei der Herstellung der Mikrokapseldispersion mit organisch neutralen Schutzkolloiden gearbeitet, da in diesem Fall der Zusatz von Sprühhilfsmittel zur Sprühtrocknung nicht notwendig ist. Die organisch neutralen Schutzkolloide wirken zusätzlich als Sprühhilfsmittel, so dass ihr Einsatz besonders vorteilhaft ist.

Das erfindungsgemäße Mikrokapselpulver weist eine gute chemische Reinigungsbeständigkeit auf. Es wird angenommen, dass die bessere Reinigungsbeständigkeit auf sich während der Sprühtrocknung bildende Hohlräume im erfindungsgemäßen Pulver zurückzuführen ist, in die die unverkapselten Wachsreste eingeschlossen werden.

Ferner ist das Mikrokapselpulver gut redispergierbar auch über die große Breite seiner verschiedensten Anwendungen in Bindemitteldispersionen und mit unterschiedlichsten Füllstoffen. Darüber hinaus neigt das erfindungsgemäße Mikrokapselpulver auch nach längerer Lagerung des Pulvers nicht zum Verblocken bei normaler Lagerung.

Die Anwendung des erfindungsgemäßen Mikrokapselpulver ist vielfältig. So lässt es sich vorteilhaft in Textilien wie Textilgeweben, Textilbeschichtungen, Nonwovens (z.B. Vliesstoffe) usw. einarbeiten.

Ein weiteres breites Anwendungsfeld sind Bindebaustoffen mit mineralischen, silikatischen oder polymeren Bindemitteln. Man unterscheidet dabei zwischen Formkörpern und Beschichtungsmassen. So zeichnen sie sich durch ihre Hydrolysestabilität gegenüber den wässrigen und oft alkalisch wässrigen Materialien aus.

Unter einem mineralischen Formkörper wird ein Formkörper verstanden, der aus einem Gemisch aus einem mineralischen Bindemittel, Wasser, Zuschlägen sowie gegebenenfalls Hilfsmitteln nach Formgebung dadurch entsteht, daß das mineralische Bindemittel-Wasser-Gemisch als Funktion der Zeit, gegebenenfalls unter Einwirkung erhöhter Temperatur, erhärtet. Mineralische Bindemittel sind allgemein bekannt. Es handelt sich um feinteilige anorganische Stoffe wie Kalk, Gips, Ton, Lehm und/oder Zement, die durch Anrühren mit Wasser in ihre gebrauchsfertige Form überführt werden, wobei letztere beim sich selbst überlassen, an der Luft oder auch unter Wasser, gegebenenfalls unter Einwirkung erhöhter Temperatur, als Funktion der Zeit steinartig verfestigen.

Die Zuschläge bestehen in der Regel aus körnigem oder faserförmigem natürlichem oder künstlichem Gestein (Kies, Sand, Glas- oder Mineralfasern), in Sonderfällen auch aus Metallen oder organischen Zuschlägen oder aus Gemischen der genannten Zuschläge, mit Korngrößen oder Faserlängen, die dem jeweiligen Verwendungszweck in an sich bekannter Weise angepasst sind. Häufig werden zum Zweck der Farbgebung auch Buntpigmente als Zuschläge mitverwendet.

Als Hilfsmittel kommen insbesondere solche Substanzen in Betracht, die das Erhärten beschleunigen oder verzögern oder die die Elastizität oder Porosität des verfestigten mineralischen Formkörpers beeinflussen. Hierbei handelt es sich insbesondere um Polymerisate, wie sie z.B. aus der US-A 4 340 510, der GB-PS 15 05 558, der US-A 3 196 122, der US-A 3 043 790, der US-A 3 239 479, der DE-A 43 17 035, der DE-A 43 17 036, der JP-A 91/131 533 und anderen Schriften bekannt sind.

In besonderer Weise eignet sich das erfindungsgemäße Mikrokapselpulver zur Modifikation von mineralischen Bindebaustoffen (mörtelartige Zubereitungen), die ein mineralisches Bindemittel enthalten, das aus 70 bis 100 Gew.-% Zement und 0 bis 30 Gew.-% Gips besteht. Dies gilt insbesondere dann, wenn Zement das alleinige mineralische Bindemittel ist. Die erfindungsgemäße Wirkung ist dabei von der Zementart im wesentlichen unabhängig. Je nach Vorhaben können also Hochofenzement, Ölschieferzement, Portlandzement, hydrophobierter Portlandzement, Schnellzement, Quellzement oder Tonerdezement verwendet werden, wobei sich die Verwendung von Portlandzement als besonders günstig erweist. Bezüglich weiterer Details sei auf die DE-A 19 623 413 verwiesen. In typischer Weise enthalten die Trockenzusammensetzungen mineralischer Bindebaustoffe, bezogen auf die Menge an mineralischem Bindemittel, 0,1 bis 20 Gew.-% Mikrokapseln.

Bevorzugt wird das erfindungsgemäße Mikrokapselpulver als Zusatz in mineralischen Beschichtungsmassen wie Putz angewendet. Ein solcher Putz für den Innenbereich setzt sich üblicherweise aus Gips als Bindemittel zusammen. In der Regel beträgt das Gewichtsverhältnis Gips/Mikrokapsel von 95:5 bis 70:30. Höhere Mikrokapselanteile sind natürlich möglich.

Beschichtungen für den Außenbereich wie Außenfassaden oder Feuchträume können Zement (zementöse Putze), Kalk oder Wasserglas (mineralische oder Silikat-Putze) oder Kunststoffdispersionen (Kunstharzputze) als Bindemittel zusammen mit Füllstoffen und gegebenenfalls Pigmenten zur Farbgebung enthalten. Der Anteil der Mikrokapseln am Gesamtfeststoff entspricht den Gewichtsverhältnissen für Gipsputze.

Ferner eignen sich das erfindungsgemäße Mikrokapselpulver als Zusatz in polymeren Formkörpern oder polymeren Beschichtungsmassen. Hierunter sind thermoplastische und duroplastische Kunststoffe zu verstehen, bei deren Verarbeitung die Mikrokapseln nicht zerstört werden. Beispiele sind Epoxy-, Harnstoff-, Melamin-, Polyurethan und Silikonharze und auch Lacke sowohl auf Lösungsmittelbasis, High-Solid-Basis, Pulverlack oder Wasserbasislack und Dispersionsfilme. Geeignet ist das Mikrokapselpulver auch zur Einarbeitung in Kunststoffschäume und Fasern. Beispiele für Schäume sind Polyurethanschaum, Polystyrolschaum, Latexschaum und Melaminharzschaum.

Ferner eignet sich das erfindungsgemäße Mikrokapselpulver als Zusatz in lignocellulosehaltigen Formkörpern, wie Spanplatten.

Vorteilhafte Effekte können ferner erzielt werden, wenn das erfindungsgemäße Mikrokapselpulver in mineralischen Formkörpern verarbeitet werden, die geschäumt werden.

Ferner eignet sich das erfindungsgemäße Mikrokapselpulver zur Modifizierung von Gipskartonplatten. Dabei werden bevorzugt 5 bis 40 Gew.-%, insbesondere 20 bis 35 Gew.-%, Mikrokapselpulver bezogen auf das Gesamtgewicht der Gipskartonplatte (Trockensubstanz) eingearbeitet. Die Herstellung von Gipskartonplatten mit mikroverkapselten Latentwärmespeichern ist allgemein bekannt und in der WO-A-1421243 beschrieben auf die ausdrücklich Bezug genommen wird. Dabei können anstelle von Karton aus Cellulosebasis auch alternative, faserartige Gebilde als beidseitige Abdeckungen für die "Gipskartonplatte" verwendet werden. Alternative Materialien sind Polymerfasern aus z.B. Polypropylen, Polyester, polyamid, Polyacrylaten, Polyacrylnitril und dergleichen. Auch Glasfasern sind geeignet. Die alternativen Materialien können als Gewebe und als sogenannte "nonwovens", also als vliesartige Gebilde eingesetzt werden. Derartige Bauplatten sind beispielsweise aus der US 4,810,569, US 4,195,110 und US 4,394,411 bekannt.

Ferner eignet sich das erfindungsgemäße Mikrokapselpulver zur Herstellung von Wärmeträgerflüssigkeit. Unter dem Begriff Wärmeträgerflüssigkeit sind im Rahmen dieser Anmeldung sowohl Flüssigkeiten für den Wärmetransport als auch Flüssigkeiten für den Kältetransport, also Kühlflüssigkeiten, gemeint. Das Prinzip der Übertragung von Wärmeenergie ist in beiden Fällen gleich und unterscheidet sich lediglich in der Übertragungsrichtung.

Solche Wärmeträgerflüssigkeiten werden erfindungsgemäß in einem System eingesetzt, umfassend einen Wärme aufnehmenden Teil und einen die Wärme abgebenden Teil zwischen denen die Wärmeträgerflüssigkeit im Kreis geführt wird und gegebenenfalls eine Pumpe zum Transport der Wärmeträgerflüssigkeit Die Wärmeträgerflüssigkeit wird dabei dicht an der Wärmequelle vorbeigeführt, um eine möglichst schnelle Wärmeaufnahme und damit Wärmeabfuhr zu erreichen. Weiter geht der Kreislauf zum Wärme abgebenden Teil, wo diesmal die Wärmeabgabe an den kühleren Wärmeabnehmer erfolgt. In einem solchen Wärmetauscherkreislauf kann sich die Wärmeträgerflüssigkeit allein durch Konvektion bewegen. Bevorzugt setzt man wenigstens eine Pumpe ein, auch um eine rasche Energieabfuhr oder einen schnelleren Wärmeaustausch zwischen der Wärmequelle und dem Verbraucher zu gewährleisten. Steuerungsmöglichkeiten für einen maximalen Wärmetransport und Wärmeübertrag sind die Geschwindigkeit der Wärmeträgerflüssigkeit, die Wahl und damit die Wärmekapazität und die Menge der jeweiligen Latentwärmespeichermaterialien und eine möglichst geringe Viskosität der Wärmeträgerflüssigkeit während sie in Bewegung ist. Bei der Auswahl der Latentwärmespeichermaterialien ist zu beachten, dass die Temperatur der Wärmequelle oberhalb des Schmelzpunktes der Wärmeträgerflüssigkeit und die Temperatur des Wärmeabnehmers unterhalb ihres Erstarrungspunktes ist. Schmelzpunkt und Erstarrungspunkt sind dabei nicht zwingend gleich, da es wie bereits oben erwähnt auch zu Gefrierpunktserniedrigungen kommen kann.

Die Arten und Funktionsweisen derartiger dynamischer Systeme sind dem Fachmann hinlänglich bekannt, z.B. aus Ullmanns Encyclopedia of Industrial Chemistry, 5.ed on CD-Rom, "Heat Exchange". Sie werden beispielsweise in Heiz- und Kühlsystemen für Gebäude, Heiz- und Kühlsystemen für Autos, in Solaranlagen, in Kühl- und Gefriergeräten, als industrielle Wärmetauscher, als "personal comfort systems", und für Mikroklima Heizungs- und Kühlsysteme verwendet.

Das erfindungsgemäße Mikrokapselpulver wird in hierzu üblichen Flüssigkeiten wie Wasser dispergiert. Ferner kann es in Formulierungen von üblichen wasserhaltigen , Kühlmitteln oder Kühlerschutzmitteln, welche beispielsweise Glykole, Glykolether oder andere organische Lösungsmittel enthalten, eingesetzt werden. Derartige Wärmeträgerflüssigkeiten können weiterhin Zusatzstoffe wie Stabilisatoren, Antikorrosionsmittel oder Verdicker enthalten.

Die erfindungsgemäßen Wärmeträgerflüssigkeiten können ferner in einem statischen System eingesetzt werden. Solche Systeme werden beispielsweise in der US 5,007,478 beschrieben, deren Ausführungen von dieser Anmeldung mit umfasst sein sollen. Eine Kühlung mittels eines statischen Systems wird beispielsweise bei elektronischen Bauteilen und bei Computern eingesetzt, um deren Wärme abzuführen. Die Wärmeträgerflüssigkeit ist dabei in einen Behälter eingeschlossen. Der Energieaustausch erfolgt auch hier über einen Wärmeaustauscher, der mit dem Behälter verbunden ist oder über einen Wärmeaustauscher im Behälter und einfach über die Behäfterfläche selbst. Hier nehmen sie kurzfristige Energiespitzen auf oder sorgen für einen Temperaturausgleich über längere Zeiträume.

Die Mikrokapseln zeigen auch als Dispersion hervorragende mechanische Eigenschaften. Sie sind auch unter den Pumpbedingungen stabil. Die Kapseln zeigen Stabilitäten gegen mechanische Belastungen und überstehen mechanische Scherraten von 10000 Upm. Ferner weisen sie eine gute Hydrolysestabilität auf.

Darüber hinaus eignet sich das erfindungsgemäße Mikrokapselpulver für Schüttungen.

Die nachfolgenden Beispiele sollen die Erfindung näher erläutern. Bei den Prozentangaben in den Beispielen handelt es sich um Gewichtsprozent.
Die Teilchengröße des Mikrokapselpulvers wurde mit einem Malvern Particle Sizer Typ 3600E gemäß einer Standardmessmethode bestimmt, die in der Literatur dokumentiert ist.

Methode zur Bestimmung der chemischen Reinigungsbeständigkeit von Wachskapseln
Hierzu bestimmt man die Löslichkeit von Mikrokapselpulver in Tetrachlorethylen. Dazu werden 5 g Mikrokapselpulver mit 45 g Tetrachlorethylen 2 Stunden bei Raumtemperatur mit einem Magnetrührer gerührt und anschließend über einen Faltenfilter das Pulver abgetrennt. Durch das Rühren mit Tetrachorethylen wird ausgetretenes Wachs gelöst, nicht aber die Kapselwand. Anschließend bestimmt man die Einwaage der Lösung in einem Blechschälchen und den Rückstand nach Verdampfen des Lösungsmittels. Hieraus kann man den prozentuale Verlust an Wachs aus dem Pulver bei einer chemischen Reinigung ermitteln.

### Herstellung der Mikrokapseldispersion

### Beispiel 1:

| | |
|---|---|
| Wasserphase: | |
| 1304 kg | Wasser |
| 664 kg | Hydroxypropylcellulose (5 %ig in Wasser) |
| 166 kg | Polyvinylalkohol (Hydrolysegrad: 79 %) |
| 7.3 kg | Natriumnitrit |

| | |
|---|---|
| Ölphase | |
| 1507 kg | Octadecan |
| 31,5 kg | Paraffinwachs (Schmelzpunkt: 68-70 °C) |
| 34 kg | Methacrylsäure |
| 68,5 kg | Methylmethacrylat |
| 68,5 kg | Butandiolacrylat |
| 2,45 kg | t-Butylperpivalat |

| | |
|---|---|
| Zulauf 1: | |
| 18,79 kg | t-Butylhydroperoxid, 10%ig in Wasser |

| | |
|---|---|
| Zulauf 2: | |
| 1,05 kg | Ascorbinsäure, 15 kg Natronlauge (25 %ig in Wasser), 100 kg Wasser |

Bei Raumtemperatur wurde die obige Wasserphase vorgelegt und mit 10%iger Salpetersäure auf pH 4 gestellt. Nach Zugabe der Ölphase wurde mit einem schnellaufenden Dissolverrührer bei 4200 Upm dispergiert. Nach 40 Minuten Dispergierung wurde eine stabile Emulsion der Teilchengröße 2 bis 12 µm Durchmesser erhalten. Die Emulsion wurde unter Rühren mit einem Ankerrüher in 40 Minuten auf 56°C aufgeheizt, innerhalb von weiteren 20 Minuten auf 70 °C, innerhalb von weiteren 60 Minuten auf 85 °C aufgeheizt. Die entstandene Mikrokapseldispersion wurde unter Rühren auf 70°C gekühlt und der Zulauf 1 dazugegeben. Der Zulauf 2 wurde unter Rühren bei 70°C über 80 Minuten dosiert zugegeben. Anschließend wurde abgekühlt. Die entstandene Mikrokapseldispersion besaß einen Feststoffgehalt von 43 % und eine mittlere Teilchengröße D(4,3) = 9,0 µm (gemessen mit Fraunhoferbeugung, Volumenmittelwert).

### Beispiel 2:

| | |
|---|---|
| Wasserphase: | |
| 500 kg | Wasser |
| 20 kg | Methylcellulose (1 %ig in Wasser) |
| 166 kg | Polyvinylalkohol (Hydrolysegrad: 79 %) |
| 2,1 kg | Natriumnitritlösung (2.5 %ig in Wasser) |

| | |
|---|---|
| Ölphase | |
| 440 kg | Heptadecan |
| 9 kg | Paraffinwachs (Schmelzpunkt: 68-70 °C) |
| 77 kg | Methylmethacrylat |
| 33 kg | Butandiolacrylat |
| 1,35 kg | t-Butylperpivalat |

| | |
|---|---|
| Zulauf 1: | |
| 1,09 kg | t-Butylhydroperoxid, 70%ig in Wasser |

| | |
|---|---|
| Zulauf 2: | |
| 0,35 kg | Ascorbinsäure, 24 g Natronlauge, 56 kg Wasser |

Bei Raumtemperatur wurde die obige Wasserphase vorgelegt und mit 10%iger Salpetersäure auf pH 4 gestellt. Nach Zugabe der Ölphase wurde mit einem schnellaufenden Dissolverrührer bei 4000 Upm dispergiert. Nach 50 Minuten Dispergierung wurde eine stabile Emulsion der Teilchengröße 2 bis 12 µm Durchmesser erhalten. Die Emulsion wurde unter Rühren mit einem Ankerrüher in 30 Minuten auf 56°C aufgeheizt, innerhalb von weiteren 20 Minuten auf 70 °C, innerhalb von weiteren 60 Minuten auf 85 °C aufgeheizt. Die entstandene Mikrokapseldispersion wurde unter Rühren auf 70°C gekühlt und der Zulauf 1 dazugegeben. Der Zulauf 2 wurde unter Rühren bei 70°C über 80 Minuten dosiert zugegeben. Anschließend wurde abgekühlt. Die entstandene Mikrokapseldispersion besaß einen Feststoffgehalt von 47 % und eine mittlere Teilchengröße D(4,3) = 6,0 µm (gemessen mit Fraunhoferbeugung, Volumenmittelwert).

### Beispiel 3:

| | |
|---|---|
| Wasserphase: | |
| 330 kg | Wasser |
| 180 kg | Polyvinylalkohol (Hydrolysegrad: 80 %) |
| 1,8 kg | Natriumnitrit (2.5 %ig in Wasser) |

| | |
|---|---|
| Ölphase | |
| 440 kg | n-Tetradecan |
| 9 kg | Paraffinwachs (Schmelzpunkt: 68-70 °C) |
| 15 kg | Methacrylsäure |
| 77 kg | Methylmethacrylat |
| 28 kg | Butandiolacrylat |
| 1,35 kg | t-Butylperpivalat |

| | |
|---|---|
| Zulauf 1: | |
| 1,09 kg | t-Butylhydroperoxid, 70%ig in Wasser |

| | |
|---|---|
| Zulauf 2: | |
| 0,34 kg | Ascorbinsäure, 56 kg Wasser |

Bei Raumtemperatur wurde die obige Wasserphase vorgelegt. Nach Zugabe der Ölphase wurde mit einem schnellaufenden Dissolverrührer bei 4500 Upm bei 40 °C dispergiert. Nach 40 Minuten Dispergierung wurde eine stabile Emulsion der Teilchengröße 2 bis 12 µm Durchmesser erhalten. Die Emulsion wurde unter Rühren mit einem Ankerrüher in 60 Minuten von 40 °C auf 70 °C aufgeheizt, innerhalb von weiteren 60 Minuten von 70 °C auf 85 °C, aufgeheizt. Die entstandene Mikrokapseldispersion wurde unter Rühren auf 70°C gekühlt und der Zulauf 1 dazugegeben. Der Zulauf 2 wurde unter Rühren bei 70°C über 100 Minuten dosiert zugegeben. Anschließend wurde abgekühlt. Die entstandene Mikrokapseldispersion besaß einen Feststoffgehalt von 49,5 % und eine mittlere Teilchengröße 4,9 µm (gemessen mit Fraunhoferbeugung, Volumenmittelwert).

### Beispiel 4:

| | |
|---|---|
| Wasserphase: | |
| 1304 kg | Wasser |
| 670 kg | Hydroxyethylcellulose (5 %ig in Wasser) |
| 180 kg | Polyvinylalkohol (Hydrolysegrad: 79 %) |
| 7.9 kg | Natriumnitrit |

| | |
|---|---|
| Ölphase | |
| 1504 kg | Ethylstearat |
| 68,5 kg | Methylmethacrylat |
| 68,5 kg | Butandiolacrylat |
| 2,45 kg | t-Butylperpivalat |

| | |
|---|---|
| Zulauf 1: | |
| 18,79 kg | t-Butylhydroperoxid, 10%ig in Wasser |

| | |
|---|---|
| Zulauf 2: | |
| 1,05 kg | Ascorbinsäure, 15 kg Natronlauge (25 %ig in Wasser), 100 kg Wasser |

Bei Raumtemperatur wurde die obige Wasserphase vorgelegt. Nach Zugabe der Ölphase wurde mit einem schnellaufenden Dissolverrührer bei 3800 Upm dispergiert. Nach 40 Minuten Dispergierung wurde eine stabile Emulsion der Teilchengröße 2 bis 12 µm Durchmesser erhalten. Die Emulsion wurde unter Rühren mit einem Ankerrüher in 40 Minuten auf 56°C aufgeheizt, innerhalb von weiteren 20 Minuten auf 70 °C, innerhalb von weiteren 60 Minuten auf 85 °C aufgeheizt. Die entstandene Mikrokapseldispersion wurde unter Rühren auf 70°C gekühlt und der Zulauf 1 dazugegeben. Der Zulauf 2 wurde unter Rühren bei 70°C über 80 Minuten dosiert zugegeben. Anschließend wurde abgekühlt. Die entstandene Mikrokapseldispersion besaß einen Feststoffgehalt von 43 % und eine mittlere Teilchengröße 6,0 µm (gemessen mit Fraunhoferbeugung, Volumenmittelwert).

### Beispiel 5

| | |
|---|---|
| Wasserphase: | |
| 572 g | Wasser |
| 80 g | einer 50 %igen kolloidalen Dispersion von SiO₂ in Wasser bei pH 9,3 (mittlere Teilchengröße 108,6 nm, Z-Mittelwert nach Lichtstreuung) |
| 2,1 g | einer 2,5 %igen, wässrigen Natriumnitritlösung |
| 20 g | Methylcellulose, 1 %-ige wässrige Lösung (Viskosität 15000 rriPas bei 2 % in Wasser) |

| | |
|---|---|
| Ölphase: | |
| 440 g | C₁₈-C₂₀-Alkan (techn. Destillat) |
| 77 g | Methylmethacrylat |
| 33 g | Butandioldiacrylat |
| 0,76 g | Ethylhexylthioglykolat |
| 1,35 g | t-Butylperpivalat |

Zulauf 1: 1,09 g t-Butylhydroperoxid, 70%ig in Wasser
Zulauf 2: 0,34 g Ascorbinsäure, 0,024 g NaOH, 56 g H₂OBei Raumtemperatur wurde die obige Wasserphase vorgelegt und mit 3 g 10%iger Salpetersäure auf pH 4 gestellt. Nach Zugabe der Ölphase wurde mit einem schnellaufenden Dissolverrührer bei 4200 Upm dispergiert. Nach 40 Minuten Dispergierung wurde eine stabile Emulsion der Teilchengröße 2 bis 12 µm Durchmesser erhalten. Die Emulsion wurde unter Rühren mit einem Ankerrüher in 4 Minuten auf 56°C aufgeheizt, innerhalb von weiteren 20 Minuten auf 58°C, innerhalb von weiteren 60 Minuten auf 71°C und innerhalb von von weiteren 60 Minuten auf 71°C auf 85°C aufgeheizt. Die entstandene Mikrokapseldispersion wurde unter Rühren auf 70°C gekühlt und der Zulauf 1 dazugegeben. Der Zulauf 2 wurde unter Rühren bei 70°C über 80 Minuten dosiert zugegeben. Anschließend wurde abgekühlt. Die entstandene Mikrokapseldispersion besaß einen Feststoffgehalt von 46,8 % und eine mittlere Teilchengröße D(4,3) = 9,5 µm (gemessen mit Fraunhoferbeugung, Volumenmittelwert).

### Beispiel für eine Sprühtrocknung

Es wurde eine Düsenkombination mit drei Einstoffdüsen verwendet. Die Bauteile der Düsenkombination der Fa. Delavan sind zum einen die Drallkammer und zum anderen die Lochplatte zur Beeinflussung des Durchsatzes bei gegebenen Turmparametern. Der Sprühturm hat einen Durchmesser von 5 m bei einer Höhe von 24 m und wird bei einem Unterdruck von 0,5- 3 mbar, gemessen an der Turmmitte, im Gleichstromverfahren mit bis zu 25 to/h, mittels Dampf erhitzter, Trockenluft gefahren. Die Temperaturdifferenz der Trocknung liegt bei ca. 70°C, wobei die Produktaustragstemperatur durch "Nachbehandlung" bei ca. 25 °C liegt. Der Produktaustrag erfolgt über Zyklone. Die Zyklonware (Feinanteil) wird redispergiert und wieder eingespeist.

Es wurde eine Mikrokapseldispersion mit einer Viskosität von 30 sec im 4 mm (Fordbecher) mit einem Vordruck 20-28 bar über die Düsenkombination versprüht.

### Beispiel 6

Mikrokapselpulver mit einer mittleren Teilchengröße um 300 µm (Durchmesseruntergrenze (80%-Wert): 110 µm, Verteilungsbreite (80%) 100-400 µm = 300 µm), ergab einen Auswaschverlust von < 1 % (0,5 - 0,8 % bei mehreren Proben).

### Beispiel 7 (nicht erfindungsgemäß)

Mikrokapselpulver mit einer mittleren Teilchengröße von 100 µm (Durchmesseruntergrenze (80%-Wert): 50 µm, Verteilungsbreite (80%) 40-110µm = 70 µm) ergab einen Auswaschverlust von 7 %.

## Patentansprüche

1. Mikrokapselpulver mit Latentwärmespeichermaterialien als Kapselkern und einer Kapselwand aufgebaut aus
10 bis 100 Gew.-% eines oder mehrerer C₁₋C₂₄-Alkylester der Acryl- und/oder Methacrylsäure,
0 bis 80 Gew.-% eines bi- oder polyfunktionellen Monomers, welches in Wasser nicht löslich oder schwer löslich ist und
0 bis 90 Gew.-% sonstige Monomere
jeweils bezogen auf das Gesamtgewicht der Monomere,
mit einer mittleren Teilchengröße im Bereich von 150 - 400 µm und mit 80 Gew.-% der Teilchen, die einen Durchmessers ≥90 µm haben.

2. Mikrokapselpulver nach Anspruch 1, wobei der 80 %-Wert der Breite der Gröβenverteilung der Teilchen s 500 µm ist.

3. Mikrokapselpulver nach Anspruch 1 oder 2, wobei das Latentwärmespeichermaterial eine lipophile Substanz mit einem fest/flüssig Phasenübergang im Temperaturbereich von -20 bis 120°C ist.

4. Mikrokapselpulver nach einem der Ansprüche 1 bis 3, wobei das Latentwärmespeichermaterial eine aliphatische Kohlenwasserstoffverbindung ist.

5. Mikrokapselpulver nach einem der Ansprüche 1 bis 4, wobei die Kapselwand aufgebaut ist aus
30 bis 95 Gew.-% eines oder mehrerer C₁-C₂₄-Alkylester der Acryl- und/oder Methacrylsäure,
5 bis 60 Gew.-% eines bi- oder polyfunktionellen Monomers, welches in Wasser nicht löslich oder schwer löslich ist und
0 bis 90 Gew.-% sonstige Monomere

6. Mikrokapselpulver nach einem der Ansprüche 1 bis 5, das erhältlich ist durch radikalische Polymerisation einer Öl-in-Wasser-Emulsion enthaltend die Monomere, die lipophile Substanz und ein Schutzkolloid und anschließender Sprühtrocknung.

7. Mikrokapselpulver nach Anspruch 6, wobei das Schutzkolloid ein organisch neutrales Schutzkolloid ist.

8. Verfahren zur Herstellung eines Mikrokapselpulvers gemäß den Ansprüchen 1 bis 7, **dadurch gekennzeichnet, dass** man die Mikrokapseldispersion über eine Einstoffdüse sprühtrocknet.

9. Verfahren nach Anspruch 8, **dadurch gekennzeichnet, dass** man ein Sprühhilfsmittel zusetzt.

10. Verwendung des Mikrokapselpulvers gemäß einem der Ansprüche 1 bis 7 als Latentwärmespeicher in Textilien.

11. Verwendung des Mikrokapselpulvers gemäß einem der Ansprüche 1 bis 7 als Latentwärmespeicher in Bindebaustoffen.

12. Verwendung des Mikrokapselpulvers gemäß einem der Ansprüche 1 bis 7 als Latentwärmespeicher in Schüttungen.

13. Verwendung des Mikrokapselpulvers gemäß einem der Ansprüche 1 bis 7 als Latentwärmespeicher in Wärmeträgerflüssigkeiten.

14. Verwendung nach Anspruch 13 in einem System umfassend einen Wärmeaufnehmenden Teil und einen die Wärme abgebenden Teil zwischen denen die Wärmeträgerflüssigkeit im Kreis geführt wird und gegebenenfalls eine Pumpe zum Transport der Wärmeträgerflüssigkeit.

15. Verwendung nach Anspruch 13 in einem statisches System.

## Claims

1. A microcapsular powder having a latent heat storage material as a capsule core and a capsule wall constructed of
from 10% to 100% by weight of one or more C₁-C₂₄-alkyl esters of acrylic and/or methacrylic acid,
from 0% to 80% by weight of a water-insoluble or substantially water-insoluble bi- or polyfunctional monomer, and
from 0% to 90% by weight of other monomers
all based on the total weight of the monomers, having an average particle size in the range of 150 - 400 µm and having 80% by weight of particles ≥ 90 µm in diameter.

2. The microcapsular powder according to claim 1 wherein the 80% value of the width of the size distribution of the particles is ≤ 500 µm.

3. The microcapsular powder according to claim 1 or 2 wherein the latent heat storage material is a lipophilic substance having a solid/liquid phase transition in the temperature range from -20 to 120°C.

4. The microcapsular powder according to any one of claims 1 to 3 wherein the latent heat storage material is an aliphatic hydrocarbyl compound.

5. The microcapsular powder according to any one of claims 1 to 4 wherein the capsule wall is constructed of
from 30% to 95% by weight of one or more C₁-C₂₄-alkyl esters of acrylic and/or methacrylic acid,
from 5% to 60% by weight of a water-insoluble or substantially water-insoluble bi- or polyfunctional monomer, and
from 0% to 90% by weight of other monomers.

6. The microcapsular powder according to any one of claims 1 to 5 which is obtainable by free-radical polymerization of an oil-in-water emulsion comprising the monomers, the lipophilic substance and a protective colloid and subsequent spray drying.

7. The microcapsular powder according to claim 6 wherein the protective colloid is an organically neutral protective colloid.

8. A process for producing a microcapsular powder according to claims 1 to 7, which comprises spray-drying the microcapsular dispersion via a single-material nozzle.

9. The process according to claim 8 wherein a spraying assistant is added.

10. The use of the microcapsular powder according to any one of claims 1 to 7 as latent heat storage medium in textiles.

11. The use of the microcapsular powder according to any one of claims 1 to 7 as latent heat storage medium in hindered building materials.

12. The use of the microcapsular powder according to any one of claims 1 to 7 as latent heat storage medium in dumped beds.

13. The use of the microcapsular powder according to any one of claims 1 to 7 as latent heat storage medium in heat transfer fluids.

14. The use according to claim 13 in a system comprising a heat-absorbing part and a heat-emitting part between which the heat transfer fluid is recirculated and optionally a pump to transport the heat transfer fluid.

15. The use according to claim 13 in a static system.

## Revendications

1. Poudre de microcapsules avec en tant que noyau de capsule des matériaux accumulateurs de chaleur latente, et comportant une paroi de capsule constituée de
10 à 100 % en poids d'un ou plusieurs esters alkyliques en C₁-C₂₄ de l'acide acrylique et/ou de l'acide méthacrylique,
0 à 80 % en poids d'un monomère bi- ou polyfonctionnel, qui n'est pas soluble ou est difficilement soluble dans l'eau, et
0 à 90 % en poids d'autres monomères, dans chaque cas par rapport au poids total des monomères,
avec une granulométrie moyenne comprise dans la plage de 150 à 400 µm, 80 % en poids des particules ayant un diamètre ≥90 µm.

2. Poudre de microcapsules selon la revendication 1, dans laquelle la valeur à 80 % de la largeur de la distribution granulométrique des particules est ≤ 500 µm.

3. Poudre de microcapsules selon la revendication 1 ou 2, dans laquelle le matériau accumulateur de chaleur latente est une substance lipophile présentant une transition de phase solide/liquide dans la plage de températures de -20 à 120°C.

4. Poudre de microcapsules selon l'une des revendications 1 à 3, dans laquelle le matériau accumulateur de chaleur latente est un composé hydrocarboné aliphatique.

5. Poudre de microcapsules selon l'une des revendications 1 à 4, dans laquelle la paroi des capsules est constituée de
30 à 95 % en poids d'un ou plusieurs esters alkyliques en C₁-C₂₄ de l'acide acrylique et/ou de l'acide méthacrylique,
5 à 60 % en poids d'un monomère bi- ou polyfonctionnel, qui n'est pas soluble ou qui est difficilement soluble dans l'eau, et
0 à 90 % en poids d'autres monomères.

6. Poudre de microcapsules selon l'une des revendications 1 à 5, qui peut être obtenue par polymérisation radicalaire d'une émulsion huile-dans-l'eau contenant les monomères, la substance lipophile et un colloïde protecteur, puis par séchage par atomisation.

7. Poudre de microcapsules selon la revendication 6, dans laquelle le colloïde protecteur est un colloïde protecteur organiquement neutre.

8. Procédé de fabrication d'une poudre de microcapsules selon les revendications 1 à 7, **caractérisé en ce qu'**on sèche par atomisation la dispersion de microcapsules par une buse monofluide.

9. Procédé selon la revendication 8, **caractérisé en ce qu'**on ajoute un auxiliaire de pulvérisation.

10. Utilisation de la poudre de microcapsules selon l'une des revendications 1 à 7 en tant qu'accumulateur de chaleur latente dans les textiles.

11. Utilisation de la poudre de microcapsules selon l'une des revendications 1 à 7 en tant qu'accumulateur de chaleur latente dans les matériaux de construction liants.

12. Utilisation de la poudre de microcapsules selon l'une des revendications 1 à 7 en tant qu'accumulateur de chaleur latente dans les remblais.

13. Utilisation de la poudre de microcapsules selon l'une des revendications 1 à 7 en tant qu'accumulateur de chaleur latente dans les liquides caloporteurs.

14. Utilisation selon la revendication 13 dans un système comprenant une partie absorbant la chaleur et une partie cédant la chaleur, entre lesquelles le liquide caloporteur circule en cycle fermé, et éventuellement une pompe pour le transport du liquide caloporteur.

15. Utilisation selon la revendication 13 dans un système statique.
